# EUROPEAN PATENT APPLICATION

(11) **EP 2 273 771 A1**
(43) Date of publication of application: **12.01.2011**
(21) Application number: 09290505.8
(22) Date of filing: 30.06.2009
(51) Int. Cl.: H04M 1/2745, H04M 1/725, H04L 12/24

(54) **Method to support an emergency call**

(71) Applicant: Alcatel Lucent, 75008 Paris (FR)
(72) Inventor: Cristallo, Geoffrey, 1080 Molenbeek (BE); Lespire, Valerie, 2000 Antwerp (BE)
(74) Representative: Narmon, Gisèle Marie Thérèse

(57) **Abstract**

A method to support an emergency call of a device in a telecommunication network is described. The method comprises a step of obtaining by an auto-configuration server of an auto-configuration management system, from a location function or from an emergency database or from both, emergency call information (1-4). Furthermore the method comprises pre-configuring the device by the auto-configuration with this emergency call information (5). In the event of setting up the emergency call by the device (6) the method the emergency call information is comprises in the emergency call whereby, upon reception by a proxy server of the emergency call the emergency call is routed towards a most appropriate emergency center based on this emergency call information. A first embodiment describes in a first step the acquiring, from the location function and based upon a device reference, a location of the device whereby the further routing comprises forwarding the emergency call via an emergency server for determining, based upon this location, the most appropriate emergency center with its associated routing information (7-11). A second embodiment describes in addition to the acquiring of the location also the acquiring, from the emergency database and based upon the location, the most appropriate emergency center with its associated routing information by the auto-configuration server itself. Hereby the auto-configuration server configures the device with an association between an emergency trigger and the routing information (7,8).

## Description

The present invention relates to a method to support an emergency call of a device, a supporting network element and the device itself to execute the method.

As it is known, operators are or may be obliged, due to legislation, to support emergency calls. In order to support emergency calls, an operator needs to be able to determine the location from which the emergency call is raised and to determine the emergency center that is the closest to the location.

Actual telecommunication networks that provide support to emergency calls are IMS-based NGN networks (Internet Protocol Multimedia Subsystem based Next Generation Network) as defined by 3GPP (3rd Generation Partnership Project) for mobile users, Fixed Wire-line networks as defined by TISPAN (ETSI TISPAN Telecommunications and Internet converged Services and Protocols for Advanced Networking) and networks as defined by NENA (National Emergency Number Association).

Such telecommunication networks that provide support to emergency calls are based on application-level signaling, functionalities and servers. In addition, in the current approaches, the determination of the most appropriate emergency center is performed at the time the call is setup and not before.

The infrastructure involved in the support of an emergency call typically contains the following elements:
- a device e.g. a phone for establishing an emergency call; and
- a location function being responsible for determining the location of the device, such as street address and/or GPS coordinates; and
- a proxy server which is an application-layer server to which the calls from the phone i.e. the emergency calls and normal calls are sent. The proxy server must be able to detect emergency calls e.g. based on the dialed number such as e.g. "911 ". The proxy server must be able to obtain the location of the device. Typically, the proxy server obtains this location from the location server when the phone registers on the proxy server (for registered users) or when it receives the emergency call request (support of non registered users). The proxy server must forward emergency calls to the emergency server, including the location of the device; and

- an emergency server that performs a lookup, based on the location of the device being received from the proxy server, in the emergency database for the closest emergency center. Finally it routes the emergency call towards the closest emergency center; and
- The emergency database that contains associations between locations i.e. addresses or regions and the respective closest emergency center. The emergency database is a database owned by the operator or combined with the emergency server.
- The emergency center answers the emergency call. This is typically a hospital, or a police center, or a fire brigade center.

In the following paragraph a typical procedure will be explained for an IP Multimedia subsystem. The related network elements are:
- the device is a Session Initiation Protocol SIP phone; and
- the location function is the Connection & Location Function CLF being standardized by TISPAN; and
- the proxy server is the Proxy Call Session Control Function P-CSCF; and
- the emergency server is the Emergency Call Session Control Function E-CSCF; and

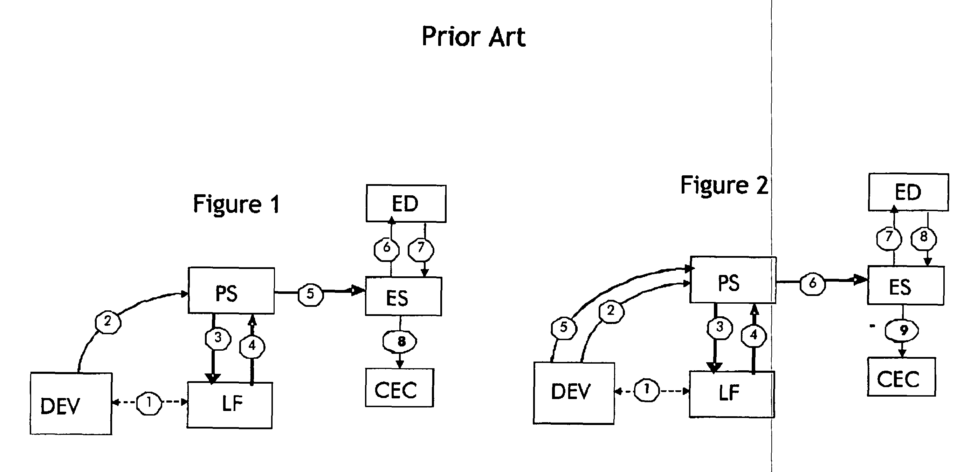

The following description supported by Figure 1 illustrates how an emergency call from a non-registered user is handled:
1) The location function obtains the location of the phone when the phone connects to the network e.g. at the moment when the IP address is assigned to the phone; and
2) At the moment when the phone establishes an emergency call the call is forwarded to the proxy server, since any call is sent to the proxy server; and
3) The proxy server recognizes an emergency call request. Since the phone is not registered at the proxy server yet, the proxy server does not know the location of the phone. Hereby, the proxy server queries the location function for the location of the phone; and
4) The location function returns the location of the phone; and
5) The proxy server forwards the emergency call request towards the emergency server and the proxy server notifies the acquired location of the phone also to the emergency server.
6) Based on the location, the emergency server performs a lookup for the closest emergency center in the emergency database; and
7) In this way the closest emergency center is determined by the emergency server; and
8) The emergency call request is further routed to the closest emergency center.

The above scenario is improved for registered users. The following description, supported by Figure 2, illustrates how an emergency call from a registered user is handled:
1) The location function obtains the location of the phone when the phone connects to the network e.g. a the moment when the IP Address is assigned to the phone; and
2) The phone registers with the proxy server. It is remarked that no emergency call request has been launched yet; and
3) The proxy server registers the phone. Since the proxy server does not know the location of the phone yet, the proxy server queries the location function for the location of the phone; and
4) The location function returns the location of the phone to the proxy server; and
5) At a certain moment the phone sets up an emergency call; and
6) Since the proxy server already knows the location of the phone i.e. a registered phone, the proxy server is able to forward immediately the emergency call request with the location to the emergency server; and
7) Here again, based on the location, the emergency server performs a lookup for the closest emergency center; and
8) Whereby the closest emergency center is found; and
9) Whereby, the emergency call request is routed to the closest emergency center.

It has to be explained that the above explained procedures are dependent on the signaling protocol i.e. the emergency call infrastructure will be different for an IMS-based phone than for a phone that use another signaling protocol. Since the procedures require a lot of different functional entities, the procedures become rather complex. Furthermore, there exists a significant delay for routing the call to the closest emergency center since several servers are involved for (eventual) determining the location and for looking up the closest emergency center. The delay for establishing the call is even bigger for non registered users.

An object of the present invention is to provide a method to support an emergency call of a device, a supporting network element and the device itself to execute the method, such as described above, but overcoming the above described drawbacks.

According to the invention, this object is achieved due to the fact that the supporting network element to support an emergency call of a device in a telecommunication network and that executes steps of the method comprises an auto-configuration server that comprises :
- obtaining means for obtaining, from either a location function or an emergency database or from both, emergency call information; and
- configuring means for pre-configuring the device with the emergency call information. Hereby the pre-configuration is usually executed at a moment previous to the initiation of an emergency call. It is remarked that the device therefore comprises storing means for storing the pre-configuration of emergency call information; and
- upon setting up of the emergency call encapsulating means of the device comprises the emergency call information in the emergency call; and
- upon reception by a proxy server of such an emergency call, the proxy server will be routing the emergency call towards the most appropriate emergency center based on this emergency call information.

It has to be remarked that the exact algorithm used by the emergency database to determine the most appropriate emergency center goes beyond the scope of this application. However possible implementations might include the following:
- selection the most appropriate emergency center in terms of geographical distance; or
- selection the most appropriate emergency center within the same linguistic region as the caller such as e.g. in a country with several languages (French and Dutch for example), an emergency call from a phone located in the French speaking part would need to be routed to the most appropriate emergency center where French is spoken; or
- selection of the emergency center with the fastest roads to the location of the caller, even if the distance is not the smallest one. Indeed an emergency center with a direct motorway connection to the caller might be preferred over a closer emergency center, but with lower speed roads.

It is anyway assumed as part of this application that the location is an important criterion used by the emergency database to determine the most appropriate emergency center.

It has to be explained that the above described step of "setting up an emergency call" comprises the different steps for launching an emergency call between the device and the proxy server. Hereby, and according to the present application, the emergency call information is included in one of the related messages such as e.g. the "Emergency Call Request".

In this way, instead of relying on Application level functionalities, the support of the emergency call is improved by letting the auto configuration server pre-configure the related set of parameters on the device. According to this approach, the Signaling Layer is not involved anymore in determining the location and optionally also not involved anymore in determining the most appropriate emergency center.

According to a first characterizing embodiment, the obtaining means comprises a first sub-obtaining means for acquiring, from the location function and based upon a device reference, a location of the device. In this way, the above mentioned emergency call information that is included in the emergency call comprises the location of the device. Upon reception by the proxy server of the emergency call, and as described above, the proxy server needs to route the emergency call towards a most appropriate emergency center based on the emergency call information. Since the emergency call information comprises the location, the proxy server doesn't have to perform a look-up for the location at the location function anymore. The proxy server is enabled to route directly the emergency call towards an emergency server. Here after the emergency server receives the emergency call that comprises the emergency call information i.e. the location and performs a look-up for the most appropriate emergency center based upon this location, and forwards the emergency call accordingly.

Indeed, by letting the auto-configuration server interacting with the location function in order to determine the location of the phone. The auto-configuration server is enabled to subsequently configure the location on the phone, so that when the phone sets up an emergency call, the phone can include its location within the request.

A second characterizing embodiment describing the obtaining means of the auto-configuration server comprises:
- a first sub-obtaining means to acquire, from the location function and based upon a device reference , a location of the device; and
- a second sub-obtaining means to acquire, from the emergency database and based upon the location, the most appropriate emergency center with its associated routing information. Hereby, the above mentioned emergency call information comprises in the acquired routing information. Furthermore, the configuring means of the auto-configuration server needs to configure as described above the device with the emergency call information. Since the emergency call information comprises the routing information being associated to the most appropriate emergency center, the configuring means configures now the device with an association between an emergency trigger and the respective routing information. This means that the pre-configuration of emergency call information comprises pre-configuring an association between an emergency trigger and routing information.

Upon setting up of the emergency call by the device, the device retrieves the association between the trigger of the emergency call and the respective routing information and comprises in the emergency call the emergency call information i.e. the respective routing information.

Indeed, by enabling the auto-configuration server to additionally interact with the emergency database, the auto-configuration retrieves, from the emergency database and based upon the previously acquired location, the most appropriate emergency center with its associated routing information. Hereby the auto-configuration sever configures the device with an association between the alias for the emergency trigger e.g. an emergency call number such as "SOS", "911", "100", "101", etc and the associated routing information such as e.g. the actual number of the emergency center e.g. +00 32 2 2736555 for an emergency center located in Brussels, Belgium. Once the alias for the Emergency Number is dialed on the phone i.e. the emergency trigger, the phone sets up automatically a call to the emergency center, simplifying the handling of the emergency call request within the network. This means that the emergency call is supported by including the routing information being associated to the emergency center in the emergency call itself and by routing directly the emergency call via the proxy server towards the emergency center based upon this routing information.

It is remarked that this approach is independent of the signaling protocol used by the device. In particular, the same physical infrastructure for determination the location information can be used, independent of the signaling protocol used by the device to setup the emergency call. The present application does not rely on pre-registration of the device to an application layer server which means that the settings related to the emergency calls are configured on the device from the moment the device boots. Moreover, the device does not need to be registered on any application server. The present application does not require any application-level server to be involved in determining the location information. As such, the delay for routing the emergency call to the most appropriate emergency center is considerably decreased.

A further characterizing embodiment is that the auto-configuration management system of the auto-configuration server is working according to a TR-69 auto-configuration protocol.

As already mentioned above, a further characterizing feature is that the routing information being implemented by a phone number of said most appropriate emergency center.

It is to be noticed that the term 'comprising', used in the claims and the following description, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', used in the following description, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

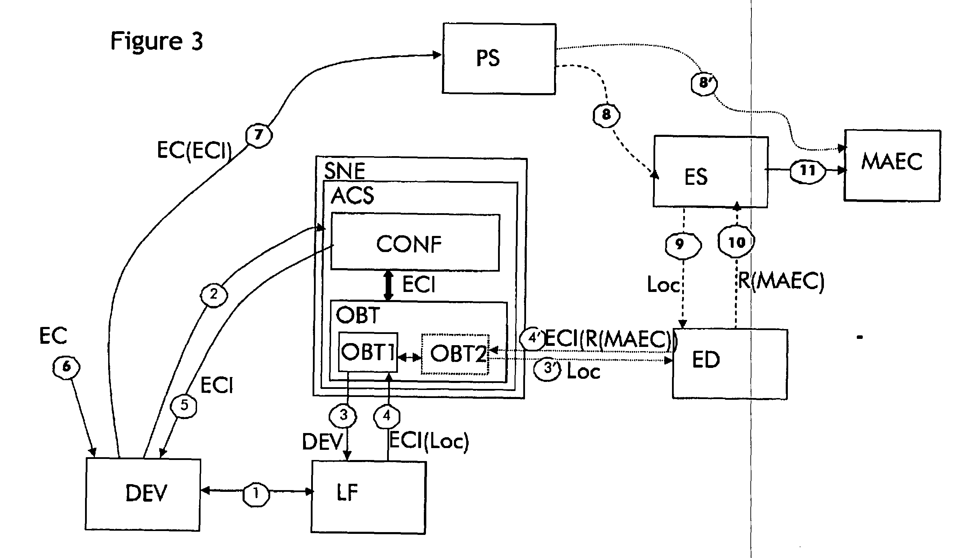

The above and other objects and features of the invention will become more apparent and the invention itself will be best understood by referring to the following description of an embodiment taken in conjunction with the accompanying drawings wherein Figure 3 represents a telecommunication network.

The working of the supporting network element and device according to the present invention in accordance with its telecommunication environment that is shown in Figure 3 will be explained by means of a functional description of the different blocks shown therein. Based on this description, the practical implementation of the blocks will be obvious to a person skilled in the art and will therefore not be described in details. In addition, the principle working of the method to support an emergency call of a device will be described in further detail.

Referring to Figure 3 the following network elements are shown: a device DEV coupled to a location function LF and a proxy server PS. The proxy server PS is on its turn coupled to an emergency server ES which is on its turn coupled to a most appropriate emergency center MAEC. According to the kind of implementation, the emergency sever might be coupled to an emergency database. This is shown with a striped line in Figure 3 and will become clearer in a later paragraph. Furthermore, the telecommunication network comprises a supporting network element SNE which is coupled to the location function LF and to the device DEV and optional to the emergency database ED. This last coupling is shown by means of a dotted line. The supporting network element SNE is implemented by means of on auto-configuration server ACS. The auto-configuration server ACS comprises a configure function CONF coupled to the device DEV; a first sub-obtainer OBT1 coupled to the location function LF and the configure function CONF; and optional a second sub-obtainer OBT, also shown wit a dotted line, coupled to the emergency databases ED and to the first sub-obtainer OBT1.

The possible implementation with its function of the different network elements is described hereafter:
- the device DEV is implemented by a phone and is enabled to set up an emergency call EC. Furthermore, the device DEV is enabled to communicate with the auto-configuration server ACS according to a TR-069 protocol; and
- the location function LF is enabled to determine the location i.e. the street address of a device based on a reference of the device DEV; and
- the proxy server PS is an application-layer server to which the calls from the phone DEV such as an emergency call EC are routed. The proxy server PS is able to detect emergency calls e.g. based on the dialed number such as e.g. "911". Furthermore, when it would be needed, the proxy server is able to obtain the location of the device DEV from the location function LF based upon the reference of the device DEV. Finally, the proxy server PS forwards emergency calls to the emergency server ES; and
- the emergency server ES is enabled to perform optionally a lookup, based on the location of the Device, at the emergency database ED in order to acquire the most appropriate emergency center MAEC. Finally it routes the emergency call towards the most appropriate emergency center MAEC; and
- The emergency database ED contains associations between the locations i.e. the addresses of where the respective devices are located and the respective most appropriate emergency center MAEC; and
- The most appropriate emergency center MAEC is enabled to answer the emergency call. This is typically a hospital, or a police center, or a fire brigade center; and
- the auto-configuration server ACS is also, as mentioned above, presumed to communicate according to a TR-69 protocol. The configuring function CONF is enabled to configure the device DEV according to this TR-069 protocol with parameters and settings such as, according to a basic idea of the present application, with emergency call information ECI. The first sub-obtainer OBT1 is enabled to acquire, from the location function LF and based upon the device reference DEV, a location Loc of the device DEV. This is shown in Figure 3 with ECI (Loc) i.e. the emergency call information that comprises a location Loc. The second sub-obtainer OBT2 is enabled to acquire, form the emergency database ED and based on the location Loc from the device DEV, the most appropriate emergency center MAEC with its associated routing information R(MAEC). This is shown in Figure 3 with ECI(R(MAEC)) i.e. the emergency call information ECI that comprises routing information R(MAEC) of the associated most appropriate emergency center MAEC.

Hereafter two possible implementations of the principle of the present invention are described. The related method steps, described hereafter, are shown in Figure 3 with arrows which are accompanied with the related number of the respective step.

A first possible implementation is provided whereby in Figure 3, next to the continuous lines and arrows, the dotted lines and arrows are to be ignored and the striped arrows are to be taken into account. In this way, the first scenario describes that the auto-configuration sever ACS has access to the location function LF but does not have access to the emergency database ED i.e. the ACS interacts with the location function LF.
A) Pre-configuration of the device DEV by the auto-configuration server ACS:
   1) The location function LF obtains the location of the device DEV, when the device DEV gets connected to the network. The way the location function gets aware that the device is connected to the network is beyond the scope of this application. As an example, the location function LF can be triggered, in the event of DHCP-based access by a Dynamic Host Configuration server - DHCP server, each time an IP Address is assigned to a given access line i.e. to a given DHCP option 82; and
   2) The device DEV connects to the auto-configuration server ACS in order to be configured i.e. normal TR-069 procedure; and
   3) The first sub-obtainer OBT of the auto-configuration server ACS obtains the location of the device DEV from the location function LF and based upon the input "DEV" (see arrow 3 in Figure 3); and
   4) The location function LF returns the location Loc of the device DEV to the first sub-obtainer OBT1 i.e. the obtained emergency call information ECI comprises the location i.e. "ECI(Loc)" (see arrow 4). The emergency call information ECI is forwarded to the configuring function CONF; and
   5) The configuring function CONF of the auto-configuration server ACS pre-configures the device DEV with the emergency call information ECI that comprises the location Loc.

Please note that the above steps 1 to 5 are performed as part of the pre-configuration of the device DEV, and are not part of the setup of the emergency call.
B) Setup of the emergency call:
   6) The user of the device DEV dials the emergency number "911" i.e. the emergency call trigger shown in Figure 3 with EC; and
   7) The device DEV sets up an emergency call with as routing information the dialed number "911" towards the proxy server PS. The device DEV includes the emergency call information (See "EC(ECI)") that however comprises the location Loc of that device DEV as previously pre-configured by the auto-configuration server ACS; and
   8) The proxy server PS does not have to perform any query to the location function LF anymore, since the location Loc is specified by the device DEV in its call. In this way the delay for setting up an emergency call EC is improved remarkable since the proxy server PS doesn't have to query the location function LF and the location function LF doesn't have to perform an internal lookup. As an example, a typical location function LF answers a location request in a few hundreds of milliseconds. Skipping this step at the time of call setup represents a considerable improvement in order to respect the maximum allowed end-to-end signaling delay. The proxy server PS forwards the emergency call EC request towards the emergency server ES and the proxy server PS notifies the known location Loc of the device DEV also to the emergency server ES; and
   9) Based on the location Loc, the emergency server ES performs a lookup for the most appropriate emergency center MAEC in the emergency database ED; and
   10) The emergency database ED determines the most appropriate emergency center MAEC and returns the associated routing information R(MAEC); and
   11) The emergency call EC request is further routed to the most appropriate emergency center based upon the acquired routing information of the most appropriate emergency center R(MAEC)).

A second possible implementation is provided whereby in Figure 3, next to the continuous lines and arrows, the dotted lines and arrows are to be taken into account and the striped arrows are to be ignored. In this way, the second scenario describes that the auto-configuration sever ACS interacts with the location function LF and the auto-confiiguration server ACS has access to the emergency database ED i.e. the auto-configuration server ACS is enabled to retrieve the most appropriate emergency center MAEC with its associated routing information R(MAEC).
A) Pre-configuration of the device DEV by the auto-configuration server ACS:
   1) The location function LF obtains the location Loc of the device DEV, when the device DEV gets connected to the network; and
   2) The device DEV connects to the auto-configuration server ACS in order to be configured according to the normal TR-069 procedure; and
   3) The first obtainer OBT1 of the auto-configuration server ACS obtains the location Loc of the device DEV from the location function LF and based upon a device reference (See "DEV"); and
   4) The location function LF returns the location Loc of the device DEV to the first obtainer OBT1 (see "ECI(Loc))" which on its turn forwards this emergency call information ECI(Loc) to the second obtainer OBT2; and
   3') Based on the location Loc, the second obtainer OBT2 queries (See "Loc") an emergency database ED for the most appropriate emergency center MAEC; and
   4')The emergency ED returns the most appropriate emergency center in the form of its associated routing information R(MAEC)) i.e. a phone number. The obtained emergency call information ECI comprises the routing information of the most appropriate emergency center R(MAEC) i.e. "ECI(R(MAEC))" (see arrow 4'). The emergency call information ECI is forwarded to the configuring function CONF; and
   5) The configuring function CONF of the auto-configuration server ACS configures the association between an emergency number alias such as e.g. "SOS" or "911" or "100" and the corresponding routing information of the most appropriate emergency center R(MAEC) i.e. a phone number of the most appropriate emergency center MAEC. According to this actual described example i.e. a configuration of an association between the emergency trigger "911" and the respective routing information R(MAEC) of the most appropriate emergency center.

Please note again that steps 1 to 5 are performed as part of the pre-configuration of the device DEV, and that these steps are not part of the setup of the emergency call EC itself.
B) Setup of the emergency call:
   6) The user of the device DEV generates an emergency trigger i.e. dials the emergency call number "911". It has to be remarked that the present application is not limited to the dialing of an emergency call as described in this example. Indeed other kinds of emergency triggers such as pushing an emergency button, shouting a predefined emergency wording, ... can be provided in order to activate the emergency procedure at the device DEV. The device DEV performs an internal lookup and determines the exact emergency center routing information R(MAEC) i.e. the phone number corresponding to the dialed alias "911 ".
   7) The device DEV sets up an emergency call that comprises the emergency call information EC(ECI) to the proxy server. This emergency call information ECI comprises, according to this second implementation, the exact routing information R(MAEC) of the most appropriate emergency center MAEC. It has to be remarked that the device DEV does not specify "SOS" or "911" as the dialed number, but the exact routing information R(MAEC) i.e. the number of the most appropriate emergency center; and
   8') No look-up needs to be performed by the proxy server PS at the signaling layer. The call is immediately routed towards the specified most appropriate emergency center MAEC according to the routing information R(MAEC) of the emergency call information ECI i.e. according to it telephone number.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method to support an emergency call of a device (DEV) in a telecommunication network, **characterized in that** said method comprises the steps of:
- obtaining by an auto-configuration server (ACS) of an auto-configuration management system, from at least one of a location function (LF) and an emergency database (ED), emergency call information (ECI); and
- pre-configuring by said auto-configuration server (ACS) said device (DEV) with said emergency call information (ECI); and
- upon setting up of said emergency call by said device (DEV) comprising in said emergency call said emergency call information (ECI); and
- upon reception by a proxy server (PS) of said emergency call, routing said emergency call towards a most appropriate emergency center (MAEC) based on said emergency call information (ECI).

2. The method according to claim 1, **characterized in that**
said step of obtaining comprises a sub-step of first acquiring from said location function (LF) and based upon a device reference (DEV), a location (Loc) of said device (DEV), said emergency call information (ECI) thereby comprising said location (Loc); and that
said step of routing comprises a sub-step of forwarding said emergency call via an emergency server (ES)' for determining, based upon said location (Loc), said most appropriate emergency center (MAEC) with its associated routing information (R(MAEC)).

3. The method according to claim 1, **characterized in that** said step of obtaining comprises the sub-steps of:
- first acquiring from said location function (LF) and based upon a device reference (DEV), a location (Loc) of said device (DEV); and
- second acquiring from said emergency database (ED) and based upon said location (Loc), said most appropriate emergency center (MAEC) with its associated routing information (R(MAEC)), said emergency call information (ECI) thereby comprising said routing information (R(MAEC)); and that said step of pre-configuring comprises pre-configuring said device (DEV) with an association between an emergency trigger (EC) and said routing information.

4. The method according to claim 1, **characterized in that** said auto-configuration management system is working according to a TR-69 auto-configuration protocol.

5. The method according to anyone of claim 1 and claim 2, **characterized** said routing information (R(MAEC)) being implemented by a phone number of said most appropriate emergency center (MAEC).

6. A supporting network element (SNE) to support an emergency call (EC) of a device (DEV) in a telecommunication network, **characterized in that** said supporting network element (SNE) comprises an auto-configuration server (ACS) that comprises
- obtaining means (OBT) to obtain, from at least one of a location function (LF) and an emergency database (ED), emergency call information (ECI); and
- configuring means (CONF) to pre-configure said device (DEV) with said emergency call information (ECI).

7. The supporting network element (SNE) of claim 6, **characterized in that** said obtaining means (OBT) comprises:
- a first sub-obtaining means (OBT1) to acquire, from said location function (LF) and based upon a device reference (DEV), a location (Loc) of said device (DEV), said emergency call information (ECI) thereby comprising said location (Loc).

8. The supporting network element (SNE) of claim 6, **characterized in that** said obtaining means (OBT) comprises:
- a first sub-obtaining means (OBT1) to acquire, from said location function (LF) and based upon a device reference (DEV), a location (Loc) of said device (DEV); and
- a second sub-obtaining means (OBT2) to acquire, from said emergency database (ED) and based upon said location (Loc), said most appropriate emergency center (MAEC) with its associated routing information (R(MAEC)), said emergency call information (ECI) thereby comprising said routing information (R(MAEC)); and further **in that** said configuring means (CONF) configures said device (DEV) with an association between an emergency trigger and said routing information (R(MAEC)).

9. A device (DEV) in a telecommunication network to set up an emergency call, **characterized in that** said device (DEV) comprises
- storing means for storing a pre-configuration of emergency call information (ECI) from an auto-configuration server (ACS); and
- upon setting up of said emergency call encapsulating means to comprise in said emergency call said emergency call information (ECI).

10. The device (DEV) of claim 9, **characterized in that** said pre-configuration of emergency call information (ECI) comprises an association between an emergency trigger (EC) and routing information (R(MAEC)).
